# EUROPÄISCHE PATENTSCHRIFT

(11) **EP 2 703 430 B1**
(45) Veröffentlichungstag und Bekanntmachung des Hinweises auf die Patenterteilung: **12.10.2016**
(21) Anmeldenummer: 13004221.1
(22) Anmeldetag: 27.08.2013
(51) Int. Cl.: C08J 9/00, C08J 9/08

(54) **Antistatisches Treibmittel und antistatischer Masterbatch zur Herstellung von geschäumten Kunststoffgegenständen**
Antistatic propellant and antistatic master batch for the manufacture of foamed plastic objects
Agent propulseur antistatique et mélange maître antistatique pour la fabrication d'objets en matière plastique expansés

(30) Priorität: 31.08.2012 DE 102012108134
(43) Veröffentlichungstag der Anmeldung: 05.03.2014
(73) Patentinhaber: Keilert, Jürgen, 68920 Wintzenheim (FR)
(72) Erfinder: Keilert, Jürgen, 68920 Wintzenheim (FR)
(74) Vertreter: Spranger, Stephan

(56) Entgegenhaltungen:
- EP-A2- 0 335 191
- DE-A1-102006 046 566
- US-A- 5 047 440

## Beschreibung

Die Erfindung betrifft ein antistatisches Treibmittel, einen antistatischen Masterbatch und ein Verfahren zur Herstellung von geschäumten Kunststoffgegenständen.

Geschäumte Kunststoffgegenstände bieten gegenüber ungeschäumten Kunststoffgegenständen den Vorteil, dass weniger Kunststoff als Ausgangsmaterial verwendet werden muss und der gefertigte Gegenstand daher ein geringes Gewicht aufweist, aber dennoch stabil und mechanisch belastbar ist. Durch Beimischung von Masterbatches, also granulare Gemische aus Kunststoffadditiven, zu einem Rohpolymer können die Eigenschaften der Kunststoffgegenstände wie ihre Farbe oder ihre UV-Stabilität verändert und verbessert werden.

Bisher erwies sich aber die Verwendung eines Masterbatches in der Herstellung für geschäumte Kunststoffe als nicht sonderlich geeignet, da die übliche Variation der Dosis und lokalen Dosis eines Masterbatches zu erheblichen Störungen im Produktionsablauf und sogar zum Produktionsausfall führt. Während für viele Anwendungen wie z.B. die Farbdosierungen gewisse Abweichungen in der Dosis für ungeschäumte Kunststoffe akzeptiert werden, da sie den Verarbeitungsprozess nicht negativ beeinflussen, bedarf es für die Herstellung von geschäumten Kunststoffgegenständen, z.B. Hohlkörper (Flaschen, Jogurt-Becher) beispielsweise unter Verwendung des Blasverfahrens eine Genauigkeit von 0,1% des enthaltenen aufschäumenden Treibmittels bzw. Treibmittel umfassenden Masterbatches. Dies bedeutet beispielsweise, dass für einen Blaskörper (Flasche) von 10 g bei einem Einsatz von 0,7% des Treibmittels, was einer Einsatzmasse von 70 mg Treibmittel/Blaskörper entspricht, dass nur ein einziges Granulat von 10 mg zu Produktionsstörungen führt. Insofern ist eine reproduzierbare und stabile Produktion der Blaskörper unter Verwendung von einem Treibmittel und/in einem Masterbatch nach dem Stand der Technik, z.B. WO 02/07949A1 nicht möglich.

Das Dokument US 5 047 440 A beschreibt ein Treibmittel zur Herstellung geschäumter Kunststoffgegenstände, das Polyethylenglycoldistearate als Dispergiermittel enthält.

Im Dokument EP 0 335 191 A2 wird vorgeschlagen, als Treibmittel ein Gemisch aus einer festen organischen Säure, beispielsweise Oxalsäure, Bernsteinsäure, Adipinsäure, Phthalsäure oder vorzugsweise Zitronensäure, und einem Alkalimetallcarbonat oder -bicarbonat, beispielsweise Natriumcarbonat, Kaliumcarbonat oder Natriumbicarbonat zu verwenden.

Das Dokument DE 10 2006 046 566 A1 schlägt vor, als Treibmittel kommen Azodicarbonamide, Nitrosoverbindungen, Hydrazide und Citronensäure sowie Citronensäurederivate, -salze und -ester, Natriumhydrogencarbonat oder Mischungen daraus zu verwenden. Das Dokument beschreibt weiter, dass Treibmittelmasterbatches zusätzlich noch Füllstoffe wie beispielsweise Antistatikas enthalten können.

Daher ist es eine Aufgabe der vorliegenden Erfindung, ein Verfahren oder ein Produkt bereitzustellen, die eine reproduzierbare und stabile Produktion von geschäumten Kunststoffgegenständen insbesondere Hohlköpern wie Blaskörpern (Flaschen, Jogurt-Becher) unter Verwendung von Masterbatches sicherstellt, so dass die Endprodukte formstabil hergestellt werden können.

Diese und andere Aufgaben der Erfindung werden gelöst mit einem Treibmittel wie mit dem unabhängigen Anspruch 1 definiert. Weitere bevorzugte Ausführungsformen der Erfindung sind in den abhängigen Ansprüchen 2 bis 8 dargelegt.

Ein Treibmittel umfassend ein Antistatikum umfasst den Vorteil, dass der Masterbatch und das Treibmittel nicht an den Wandungen von Fördereinheiten, Vorratsbehältern, Zufuhreinrichtungen, Dosierungen und Zu- und Abläufen etc. von Verarbeitungsmaschinen wie Spritzgussmaschinen, Extrusionsanlagen oder Blasfomanlagen etc. anhaften, so dass Fehler in der Zudosierung zum Kunststoff oder zur Verarbeitungsmaschine reduziert werden. Dies verhindert Unterdosierungen, indem eine geringere Menge das Masterbatches an den Wänden haftet, als auch Überdosierungen in dem Fall, wenn der anhaftende Masterbatch sich von den Wandungen durch mechanische Einflüsse oder einfach die Schwerkraft ablöst. Durch den Einsatz eines ein Antistatikum umfassenden Treibmittels ist es möglich eine Genauigkeit von 0,1% oder besser in der Dosierung des Masterbatch sicherzustellen, so dass die geschäumten Kunststoffprodukte reproduzierbar und formstabil hergestellt werden können.

In einer ersten Ausführungsform umfasst das Antistatikum ein Glycerol Stearat, bevorzugt ein Glycerol-Mono-Stearat. Fettsäureester sind als Antistatikum insbesondere für die Herstellung von Kunststoffen auf Polyethylen oder Polypropylen geeignet. Die Verwendung von einem Glycerol-Mono-Stearat verhindert aber nicht nur zuverlässig eine statische Aufladung des Masterbatches sondern führt zu einer Verbesserung der Zellstruktur im Endprodukt, was auf Grund der rau-weichen Oberfläche zu einer besseren Haptik führt.

In einer anderen Ausführungsform kann das Antistatikum des Treibmittels ethoxylierte Amine und/oder Alkylsulfonate umfassen. Während ethoxylierte Amine für die Verarbeitung von Polyolefinen, wie Polyethylen und Polypropylen, die Verarbeitung von Styrolen wie Polystyrol, Styrol-Acrylnitril, Acrylnitril-Butadien-Styrol Copolymere und High Impact Polystyrene und die Verarbeitung von Polyvinylchlorid bevorzugt eingesetzt werden können, können Alkylsulfonate vorzugsweise für die Verarbeitung von Styrolen wie Polystyrol, Styrol-Acrylnitril, Acrylnitril-Butadien-Styrol Copolymere und High Impact Polystyrene und die Verarbeitung von Polyvinylchlorid eingesetzt werden.

Für Treibmittelbatche auf Styrolbasis, z.B. Polystyrol wird bevorzugt ein Alkylsulfonat oder ein ethoxyliertes Amin eingesetzt.

Das ethoxylierte Amin weist vorzugsweise folgende Formel auf: 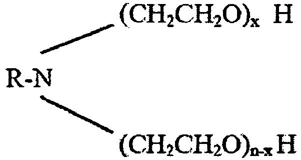 wobei R ein Alkyl-Radikal mit vorzugsweise 10 bis 18 Kohlenstoffatomen und n der Gesamt-Molanzahl von Ethylenoxid entspricht, wobei n vorzugsweise 2 bis 15 Mol entspricht. Diese Ausführungsform hat den Vorteil, dass auch bei der Verarbeitung von Polyvinylchlorid und Styrolen die Einsatzmengen des Antistatikums gering gehalten werden können, so dass kein dauerhaftes antistatisches Verhalten im Endprodukt erzeugt wird, sondern dass die Anhaftungen des Masterbatches insbesondere an den Wandungen der Dosierungen, in den Rohrleitungen und insbesondere beim Mischen des Masterbatches mit dem Polymer verhindert werden.

Neben dem Antistatikum umfasst das Treibmittel vorzugweise mindestens einen der Bestandteile Natriumhydrogencarbonat, eine Carbonsäure, z.B. Zitronensäure und ihre Derivate und einen als Nukleierungsmittel wirkenden Feststoff. Diese Mischung generiert CO2 als Treibsubstanz, welches FCKW frei ist und somit nicht den Treibhauseffekt fördert, auf Grund der Chlorfreiheit relativ leicht zu entsorgen ist und im Rahmen der freigesetzten Menge umweltschonend ist.

Ferner birgt es den Vorteil gegenüber exothermen Treibmitteln wie Azodicarbonamid oder Hydrazinen den Vorteil der geringere Brennbarkeit, was die Mischung zu einem sicheren Treibmittel macht. Zudem ist es relativ kostengünstig.

Die Teilchengröße der einzelnen Bestandteile des Treibmittels beträgt vorzugsweise ≤ 40µm, mehr bevorzugt ≤ 30 µm und besonders bevorzug ≤ 15 µm. Als Nucleierungsmittel können generell alle keimbildenden Feststoffe verwendet werden, vorzugsweise Talkum, Kreide, Metalloxide, Siliziumdioxid oder Farbpigmente oder deren jeweiligen Kombinationen, aber auch faserartige Füllstoffe wie z.B. Kurzglasfasern, wirken als physikalisches Nukleierungsmittel.

Vorzugsweise werden die Bestandteile des Treibmittels in einem Gewichtsverhältnis von Natriumhydrogencarbonat zu Mononatriumcitrat zu Nucleierungsmittel von 1 zu 0,5 bis 5 zu 3 bis 13,5 Gewichtsprozent, bevorzugt im Gewichtsverhältnis 1 zu 0,5 bis 2,5 zu 3 bis 6 Gewichtsprozent, besonders bevorzugt 1 zu 0,5 bis 2 zu 3 bis 4 Gewichtsprozent eingesetzt.

Ein solches Treibmittel generiert etwa 12 bis 35 ml Gas pro Gramm Treibmittel, was zu relativ geringen mechanischen Belastungen führt, so dass die resultierenden Gasblasen gleichförmig verteilt werden können, was die Qualität des Aufschäumprozesses und wiederum die Stabilität und mechanische Festigkeit des Kunststoffprodukts erhöht.

Das Treibmittel kann in allen genannten Ausführungsform Bestandteil eines Masterbatches sein oder individuell eingesetzt werden.

Daher ist aber ferner Bestandteil der vorliegenden Erfindung ein Masterbatch, der ein Treibmittel umfasst, das wiederum ein Antistatikum mit oben beschriebenen Eigenschaften umfasst. Vorteile sind die gleichzeitige Aufschäumung des Kunststoffes und die Addition anderer Eigenschaften, sowie die lange Haltbarkeit und natürlich die fehlende Anhaftung an Wänden der Verarbeitungsgeräte. Beispielsweise kann der Masterbatch weitere Additive enthalten, die zur Färbung, zum Flammschutz, zur UV-Stabilisierung, Sterilität oder anderen Eigenschaften führen. Als Additive kommen in der Kunststoffherstellung und -verarbeitung übliche, dem Fachmann bekannte und in der Literatur beschriebene Stoffe in Betracht, beispielsweise Gleit- oder Entformungsmittel, Stabilisatoren gegen Wärmeeinwirkung (Antioxidantien), Weichmacher, Stabilisatoren gegen Lichteinwirkung (UV-Stabilisatoren), Flammschutzmittel, sowie andere Additive, oder deren Mischungen.

Das Treibmittel sowie der Masterbatch kann zur Herstellung von Kunststoffbehältern verwendet werden.

Vorzugsweise umfasst der Masterbatch einen Träger aus einem Polymer, bevorzugt ein Polyolefin oder ein Träger auf Styrolbasis, wodurch der Stoffaustausch des Treibmittels mit dem zu schäumenden Polymer verbessert wird. Es können aber auch andere Polymere wie beispielsweise PVC eingesetzt werden. Dadurch kommt es zu einer gleichmäßigen und schnellen Aufschäumung des Kunststoffs.

In einer bevorzugten Ausführungsform umfasst der Masterbatch einen Träger auf Styrolbasis, vorzugsweise Polystyrol, aber auch Styrol-Acrylnitril, Acrylnitril-Butadien-Styrol Copolymere und High Impact Polystyrene, und mindestens ein Alkylsulfonat oder ein ethoxiliertes Amin, bevorzugt ein Alkylsulfonat. Dabei ist ein Träger auf Styrolbasis besonders geeignet Alkylsulfonate mit dem zu schäumenden Polymer, insbesondere, wenn es sich um ein Styrol handelt, zu vermischen.

In einer anderen bevorzugten Ausführungsform umfasst der Masterbatch einen Träger auf Polyolefinbasis, vorzugsweise auf Polyethylenbasis und/oder Polypropylenbasis und ein ethoxyliertes Amin, vorzugsweise ein Glycerol Stearat, besonders bevorzugt ein Glycerol-Mono-Stearat umfasst.

Ein Träger auf Polyolefinbasis ist besonders geeignet, Fettsäureester mit dem zu schäumenden Polyolefin, insbesondere wenn das zu schäumende Polymer ein Polyolefin z.B. Polyethylen oder Polypropylen umfasst, zu vermischen und mit hoher Qualität aufzuschäumen.

Vorzugsweise umfasst das Treibmittel mit einem Träger aus Polyolefin einen Fettsäureester mit einem Anteil von 0,2 bis 0,8%, bevorzugt von 0,3 bis 0,6%, besonders bevorzugt von 0,4 bis 0,5%, des Fettsäureesters. Generell kann mit dem Anteil des eingesetzten Antistatikum die Lagerdauer des Treibmittels und Masterbatches variiert werden. Bei einem Einsatz von 0,45% Glycerol Monostearat wird eine Lagerdauer von einem Jahr erreicht. Der Oberflächenwiderstand des Masterbatches beträgt bei einer Verwendung von 0,45% Glycerol Monostearat 10¹⁰ bis 10¹¹ Ω und zeigt damit eine sehr gute antistatische Wirkung, was die Anhaftung des Masterbatches an die Gerätewand verhindert und zu formstabilen Kunststoffprodukten führt.

Zudem umfasst die Erfindung ein Verfahren zur Herstellung von geschäumten Kunststoffgegenständen, wobei ein thermoplastischer Werkstoff mit einem eben beschriebenen Masterbatch vorzugsweise in einem Extruder vermischt wird und die Mischung in einem formgebenden Werkzeug geformt wird.

Breschrieben werden auch geschäumte Kunststoffgegenstände, die nach oben genanntem Verfahren hergestellt sind. Die geschäumten Kunststoffgegenstände können vorzugsweise im Bereich der Verpackungsbranche, der Automobilbranche sowie der Elektrogerätebranche verwendet werden.

Im Rahmen dieser Erfindung wird unter einem Extruder eine kontinuierlich arbeitende Fördermaschine verstanden, die unter Druck und Wärme zu formende Kunststoffmassen fördern, aufschmelzen, verdichten und homogenisieren kann. Vorzugsweise wird mit ≥20-D Extrudern, besonders bevorzugt mit ≥24-D Extrudern gearbeitet.

Das chemische Treibmittel wird entweder zusammen mit dem Polymer vorgemischt, oder in eine separate, handelsübliche Dosierung, wie sie für die Zugabe von Additiven z.B. Farbmasterbatche eingesetzt wird, der handelsüblichen Blasformmaschine zugegeben.

In einer bevorzugten Ausführungsform werden der Masterbatch und das Treibmittel gleichzeitig mit dem Kunststoff zugeführt, es ist aber auch möglich das Polymer und/oder den Masterbatch vorzulegen und das Treibmittel dazu zu dosieren.

Die Extruderauslassöffnung und das formgebende Werkzeug können über ein Verbindungselement verbunden sein. Bevorzugt ist der Aufschäumvorgang vor dem Eintritt in das formgebende Werkzeug bereits abgeschlossen. Die Innenwände des formgebenden Werkzeugs sind entsprechend den Produkterfordemissen geformt. Durch die während des Ausformungsvorgangs im Inneren des Werkzeugs herrschenden Bedingungen wird die eingebrachte geschäumte Masse durch das Anpressen, durch einen sehr niedrigen Blasdruck im Bereich von 0,5 bis max. 2bar, an die Innenwände des Werkzeugs in die entsprechende Form gebracht. Nach der Formierung kann das formgebende Werkzeug geöffnet und der geschäumte Kunststoffgegenstand als fertiges Produkt entnommen werden.

Die Qualität der Ausformung kann optimiert werden, wenn im Werkzeug ein Vakuum oder Unterdruck, vorzugsweise ein Unterdruck von -0,6 bis -0,8 bar, angelegt wird und Druckluft, vorzugsweise konstante Druckluft, im Inneren des Werkzeugs durchgeführt wird.

Das Anlegen eines Vakuums führt dazu, dass Lufteinschlüsse (beispielsweise am Boden oder Schulter einer Flasche), die zu Fehlstellen z.B. Dellen im Endprodukt führen, abgeführt werden und so Fehlstellen vermieden werden. Die Zuführung von konstanter Druckluft, vorzugsweise mit Hilfe eines Blasdom, der so angebracht ist, dass er den in das formgebende Werkzeug eingeführten Schlauch von innen aufbläst, hingegen verbessert den Ausformungsprozess durch bessere und schnellere Anpressung der aufgeschäumten Kunststoffmasse an die Innenwand des Werkzeugs. Der Druck, der vorzugsweise auf 0,5 bis 2 bar, besonders vorzugsweise von 0,5 bis 1,5 bar eingestellt wird kann beispielsweise über die Verwendung einer Proportionalventiltechnik konstant gehalten werden. Eine Konstanz des Druckes fördert wiederum die Qualität der Ausformung.

Als thermoplastische Werkstoffe im erfindungsgemäß beanspruchten Verfahren können u.a. Low Density Polyethylen (LDPE), High Density Polyethylen (HDPE), Linear Low Density Polyethylen (LLDPE), Polyisobutylen (PIB), Poly-butadien, Polyethylenterephthalat (PET), PE-Copolymere, Polypropylen (PP), Polyamid (PA), Low Density Polyamid (LDPA), Polystyrol (PS), Styrol-Copolymere, Acrylnitril-Butadien-Styrol-Copolymere (ABS), Styrol-Acrylnitril-Copolymere, aber auch Polyvinylchlorid (PVC) hart oder weich oder Polycarbodiimideeingesetzt werden. Die im Rahmen der Erfindung bevorzugt eingesetzten thermoplastischen Werkstoffe gehören der Gruppe der Polyolefine, der Styrole, der Polyester und der Polyamide an oder ist PVC, besonders bevorzugt aber ist Polyethylen und Polypropylen.

Das Schäumen von nur der äußeren Schicht eines Blaskörpers gemäß der vorliegenden Erfindung erfolgt vorzugsweise über Koextrusion.

Im Folgenden wird ein bevorzugtes Beispiel einer Ausführungsform gegeben:
Ein Treibmittel enthaltend 12,5% Natriumhydrogencarbonat, 37% Mononatriumcitrat und 50% Kreide mit einer Partikelgröße von 50 bis 2000 nm und 0,5% von 90% igem Glycerol Monostearat als Antistatikum wird gleichzeitig mit Polypropylen in einen 24-D-Extruder zugeführt, so dass die finale Konzentration des Treibmittels 0,7 Gewichtsprozent beträgt. Der Einzug der Polypropylenmasse und des Treibmittels ist nach wenigen Schneckengängen abgeschlossen und die Polypropylenmasse tritt in der Aufschmelz-und Mischzone ein. Dort wird es homogenisiert und verlässt über eine Auslassdüse eines Blaskopfes den Extruder und wird in das formgebende Werkzeug eingeführt. Beim Austritt der Kunststoffschmelze aus dem Blasdorn, expandiert das eingeschlossene Treibgas und formt einen gleichförmigen, Blasendurchsetzten Blasschlauch. Vom Eintritt in den Extruder bis zum Austritt aus der Düse durchläuft das Polypropylen dabei folgende Temperaturschritte: Das Polypropylen wird mit der atmosphärischen Umgebungstemperatur in den Einfülltrichter z.B. der Blasmaschine gegeben. Die erste beheizbare Extruderzone hat 170 °C und wird im Extruder sequentiell auf 210°C, 220°C und 230°C erhitzt, gemischt und extrudiert. Dabei muss an einer Stelle im Extruder die Zersetzungstemperatur des Treibmittels überschritten werden, was im Falle eines Carbonat und Zitrat basierten Treibmittels einer Temperatur von 220 bis 230°C bedarf. Das Treibmittel wirkt bei einer Temperatur von 180°C bis 250°C. An der Auslassdüse beträgt die Temperatur des Polypropylen 210°C im Form bildenden Schritt. Wird die schlauchförmige Polypropylenmasse vollständig von dem formgebenden Werkzeug umschlossen, wird das Schlauchstück abgequetscht und im Werkzeug weiter ausgeformt. Das formgebende Werkzeug ist beispielsweise für die Herstellung von Flaschen geformt und das Polypropylen des Schlauchstücks wird an die Außenwände des Werkzeugs gepresst.

Nach Beendigung der Ausformung und Abkühlung des Kunststoffgegenstandes kann der vom Abquetschvorgang vorhandene Rest leicht weggestanzt werden und das Werkzeug geöffnet werden und das Produkt entfernt werden. Das Werkzeug steht dann bereit für den nächsten Schuss werden. Die Verwendung des antistatischen Treibmittels hat eine Verbesserung der Zellstruktur zur Folge, was sich in einer rau-weichen Oberfläche des Polypropylenprodukts mit hervorragender Haptik bemerkbar macht.

Die anfallenden Butzen, Fehlteile etc. können gemahlen werden und dem Virginmaterial ohne Verschlechterung der Produktqualität zugesetzt werden.

## Patentansprüche

1. Ein Treibmittel für die Herstellung von geschäumten Kunststoffgegenständen insbesondere von Hohlkörpern im Blasverfahren umfassend ein Antistatikum, **dadurch gekennzeichnet, dass** das Antistatikum
ein Glycerol Stearat umfasst, oder
ethoxylierte Amine und/oder Alkylsulfonate umfasst.

2. Ein Treibmittel für die Herstellung von geschäumten Kunststoffgegenständen insbesondere von Hohlkörpern im Blasverfahren nach Anspruch 1, wobei das Antistatikum ein Glycerol-Mono-Stearat umfasst.

3. Ein Treibmittel für die Herstellung von geschäumten Kunststoffgegenständen insbesondere von Hohlkörpern im Blasverfahren nach Anspruch 1, wobei das ethoxylierte Amin folgende Formel aufweist: 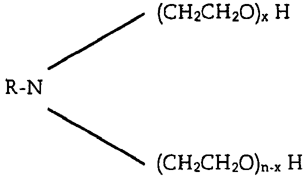 wobei R ein Alkyl-Radikal mit vorzugsweise 10 bis 18 Kohlenstoffatomen und n der Gesamt-Molanzahl von Ethylenoxid entspricht, wobei n vorzugsweise 2 bis 15 Mol entspricht.

4. Ein Treibmittel für die Herstellung von geschäumten Kunststoffgegenständen insbesondere von Hohlkörpern im Blasverfahren nach einem der Ansprüche 1 bis 3, wobei das Treibmittel einen oder mehrere der Bestandteile Natriumhydrogencarbonat, eine Carbonsäure, z.B. Zitronensäure und ihre Derivate und einen als Nukleierungsmittel wirkenden Feststoff umfasst.

5. Masterbatch für die Herstellung von geschäumten Kunststoffen umfassend ein Treibmittel nach einem der Ansprüche 1 bis 4.

6. Masterbatch für die Herstellung von geschäumten Kunststoffen nach Anspruch 5, wobei der Masterbatch einen Träger auf Styrolbasis, vorzugsweise Polystyrol, umfasst und vorzugsweise mindestens ein Alkylsulfonat oder ein ethoxyliertes Amin, besonders bevorzugt ein Alkylsulfonat umfasst.

7. Masterbatch für die Herstellung von geschäumten Kunststoffen nach Anspruch 5, wobei der Masterbatch einen Träger auf Polyolefinbasis, vorzugsweise auf Polyethylenbasis und/oder Polypropylenbasis, umfasst.

8. Masterbatch für die Herstellung von geschäumten Kunststoffen nach Anspruch 5 oder 7, wobei der Masterbatch das Glycerol Stearat zu 0,2 bis 0,8%, bevorzugt zu 0,3 bis 0,6%, besonders bevorzugt zu 0,4 bis 0,5%, umfasst.

9. Verfahren zur Herstellung von geschäumten Kunststoffgegenständen, wobei ein thermoplastischer Werkstoff mit einem Masterbatch nach Anspruch 5 bis 8 vorzugsweise in einem Extruder vermischt wird und die Mischung in einem formgebenden Werkzeug geformt wird.

10. Verwendung des Treibmittels oder Masterbatches nach Anspruch 1 bis 8 zur Herstellung von Kunststoffbehältern.

## Claims

1. A foaming agent for producing foamed plastic items, in particular hollow articles using the blow-molding process, comprising an antistatic agent,
**characterized in that** the antistatic agent
comprises a glycerol stearate, or
comprises ethoxylated amines and/or alkyl sulfonates.

2. A foaming agent for producing foamed plastic items, in particular hollow articles using the blow-molding process, according to claim 1, wherein the antistatic agent comprises a glycerol monostearate.

3. A foaming agent for producing foamed plastic items, in particular hollow articles using the blow-molding process, according to claim 1, wherein the ethoxylated amine has the following formula: 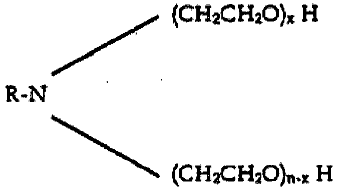 where R represents an alkyl radical with preferably 10 to 18 carbon atoms and n represents the total number of moles of ethylene oxide, where n preferably corresponds to 2 to 15 moles.

4. A foaming agent for producing foamed plastic items, in particular hollow articles using the blow-molding process, according to any one of claims 1 to 3, wherein the antistatic agent comprises one or more of the following constituents: sodium hydrogen carbonate, a carboxylic acid, for example citric acid and its derivatives, and a solid acting as a nucleation agent.

5. Master batch for producing foamed plastics, comprising a foaming agent according to any one of claims 1 to 4.

6. Master batch for producing foamed plastics according to claim 5, wherein the master batch comprises a styrene-based carrier, preferably polystyrene, and preferably comprises at least one alkyl sulfonate or an ethoxylated amine, especially preferably an alkyl sulfonate.

7. Master batch for producing foamed plastics according to claim 5, wherein the master batch comprises a polyolefin-based carrier, preferably polyethylene-based and/or polypropylene-based.

8. Master batch for producing foamed plastics according to claim 5 or 7, wherein the master batch comprises the glycerol stearate at 0.2% to 0.8%, preferably at 0.3% to 0.6%, especially preferably at 0.4% to 0.5%.

9. Method for producing foamed plastic items, wherein a thermoplastic material is mixed with a master batch according to claims 5 to 8, preferably in an extruder, and the mixture is molded in a shaping mold.

10. Use of the foaming agent or master batch according to claims 1 to 8 for producing plastic containers.

## Revendications

1. Un agent d'expansion pour la fabrication d'objets en matière plastique moussée notamment de corps creux selon un procédé de soufflage comprenant un antistatique, **caractérisé en ce que** l'antistatique
comprend un stéarate de glycérol, ou
des amines éthoxylées et/ou alkylsulfonates.

2. Un agent d'expansion pour la fabrication d'objets en matière plastique moussée notamment de corps creux selon un procédé de soufflage selon la revendication 1, l'antistatique comprenant un monostéarate de glycérol.

3. Un agent d'expansion pour la fabrication d'objets en matière plastique moussée notamment de corps creux selon un procédé de soufflage selon la revendication 1, l'amine éthoxylée correspondant à la formule suivante : 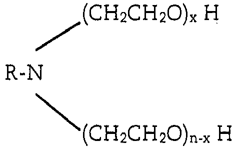 dans laquelle R est un radical alkyle avec de préférence 10 à 18 atomes de carbone et n correspondant au nombre total de moles d'oxyde d'éthylène, n correspondant de préférence à 2 à 15 mol.

4. Un agent d'expansion pour la fabrication d'objets en matière plastique moussée notamment de corps creux selon un procédé de soufflage selon une des revendications 1 à 3, l'agent d'expansion comprenant un ou plusieurs des composants hydrogènocarbonate de sodium, un acide carbonique, comme par exemple l'acide citrique et ses dérivés et un solide agissant comme agent de nucléation.

5. Mélange-maître pour la fabrication de matière plastique moussée comprenant un agent d'expansion selon une des revendications 1 à 4.

6. Mélange-maitre pour la fabrication de matière plastique moussée selon la revendication 5, le mélange-maître comprenant un support à base de styrène, de préférence du polystyrène et de préférence au moins un alkylsulfonate ou une amine éthoxylée et de manière particulièrement préférentielle un alkylsulfonate.

7. Mélange-maître pour la fabrication de matière plastique moussée selon la revendication 5, le mélange-maître comprenant un support à base de polyoléfine, de préférence à base de polyéthylène et/ou à base de polypropylène.

8. Mélange-maître pour la fabrication de matière plastique moussée selon la revendication 5 ou 7, le mélange-maître comprenant le stéarate de glycérol dans une proportion de 0,2% à 0,8% de préférence 0,3% à 0,6%, de manière particulièrement préférentielle 0,4% à 0,5%.

9. Procédé pour la fabrication d'objets en matière plastique moussée, un matériau thermoplastique étant mélangé avec un mélange-maître selon la revendication 5 à 8, de préférence dans une extrudeuse et le mélange étant moulé dans un outil moulant.

10. Utilisation de l'agent d'expansion ou du mélange-maitre selon la revendication 1 à 8 pour la fabrication de récipients en matière plastique.
